# DEMANDE DE BREVET EUROPEEN

(11) **EP 3 492 621 A1**
(43) Date de publication de la demande: **05.06.2019**
(21) Numéro de dépôt: 18208911.0
(22) Date de dépôt: 28.11.2018
(51) Int. Cl.: C23C 4/02, C23C 4/08, C23C 4/18, C23C 4/134

(54) **PROCÉDÉ POUR AMÉLIORER LES PROPRIÉTÉS DE RÉSISTANCE À L'USURE D'UNE PIÈCE MÉCANIQUE**

(30) Priorité: 29.11.2017 FR 1761355
(71) Demandeur: Airbus Operations SAS, 31060 Toulouse (FR)
(72) Inventeur: POUPON, Cédric, 31770 COLOMIERS (FR); TERRAZZONI, Jérôme, 31300 TOULOUSE (FR)
(74) Mandataire: Brevalex

(57) **Abrégé**

La présente invention concerne un procédé pour améliorer les propriétés de résistance à l'usure d'une pièce comprenant les étapes suivantes consistant à (a) déposer par projection thermique, sur tout ou partie de la surface de la pièce, une couche comprenant du molybdène ; (b) mettre la surface de la pièce présentant une couche comprenant du molybdène en contact avec une solution aqueuse à une température supérieure à la température ambiante. La présente invention concerne également une pièce traitée conformément à un tel procédé.

## Description

### DOMAINE TECHNIQUE

L'invention appartient au domaine des traitements de surface.

Plus particulièrement, la présente invention vise à fournir un procédé permettant de traiter, de façon durable, une pièce pour en modifier les propriétés de résistance à l'usure et notamment les propriétés de résistance à l'usure mécanique.

La présente invention concerne également les pièces mécaniques ainsi traitées.

### ÉTAT DE LA TECHNIQUE ANTÉRIEURE

De nombreux domaines technologiques mettent en jeu des mécanismes complexes dans lesquels les mouvements relatifs des pièces les unes par rapport aux autres posent des problèmes d'usure qui peuvent affecter la fiabilité et la durabilité de ces pièces.

Ainsi, dans le domaine aéronautique, les liaisons d'articulation qui fonctionnent à chaud entre les composants moteur et mât sont assurées par un assemblage constitué de rotule, d'axe et de bagues.

Ce système à rotule comporte généralement une pièce concave et une pièce sphérique portée par un axe. La partie sphérique qui vient se loger dans la partie concave est animée d'un mouvement de rotation dans toutes les directions moyennant quoi la surface de la partie sphérique et la surface de la partie concave sont en frottement permanent l'une contre l'autre.

On distingue principalement, dans le cadre du système à rotule et dans d'autres systèmes similaires, deux types d'usure par frottements. Le premier de ces types, nommé « fretting wear » en anglais implique un frottement de très faible amplitude qui est généralement de l'ordre de quelques micromètres. Il intervient entre deux surfaces, de nature identique ou différente, en contact l'une avec l'autre et soumises à des mouvements oscillatoires du type microvibrations, d'amplitude suffisamment faible pour ne générer qu'un glissement partiel du contact. Le second type d'usure par frottements correspond à une usure par glissement dont l'amplitude de mouvement peut atteindre plusieurs dizaines de millimètres.

L'usure par frottements se développe à partir de fines aspérités présentes sur les surfaces frottantes en contact et qui tendent à se souder mutuellement. Lorsque la charge appliquée localement est élevée et dans le cas où les matériaux des deux surfaces frottantes sont de compositions similaires, les frottements provoquent des usures surfaciques et des dégradations pouvant aller jusqu'au grippage de l'axe ou de la rotule. De plus, lorsque l'environnement des liaisons d'articulation présente une température élevée notamment entre 300°C et 650°C, l'apparition d'usure adhésive responsable in fine des cas de grippage est favorisée.

L'état de la technique connaît déjà un certain nombre de procédés permettant d'améliorer la résistance à l'usure de surfaces frottantes.

Par exemple, il existe des traitements de surface permettant d'améliorer la tenue des surfaces frottantes d'alliage de titane et de réduire le coefficient d'usure. Ce traitement peut consister à déposer une couche de revêtement de nitrures de titane, ou encore en un traitement thermochimique basé sur une diffusion d'azote permettant ainsi de former, en surface des pièces en alliage de titane, un composé mixte de type TiN et Ti₂N de quelques micromètres d'épaisseur. Cependant, ces traitements limités à des surfaces en alliage de titane sont peu adaptés au système du type rotule. Par ailleurs, ils ne permettent pas d'obtenir une réduction significative de l'usure par glissement et du phénomène de grippage.

La demande de brevet FR 3042563 déposée au nom d'Airbus Opérations et publiée le 21 avril 2017 propose une interface d'adaptation de friction entre deux pièces en nickel, en alliage de nickel ou en alliage de cobalt chrome. Cette interface implique deux couches d'adaptation, chacune déposée sur une des deux pièces. La première de ces couches d'adaptation est une couche microporeuse en un alliage de cobalt, de chrome, de molybdène et de silicium, alors que la seconde couche d'adaptation obtenue par traitement thermochimique de diffusion de carbone en surface de la deuxième pièce coopère avec la première couche d'adaptation de manière à former, sur celle-ci, une couche d'oxyde. Même si cette interface d'adaptation permet de réduire, de manière significative, l'usure adhésive par frottement pour des températures de fonctionnement comprises entre 300°C et 650°C, elle n'est adaptée qu'à des pièces en nickel, en alliage de nickel ou en alliage de cobalt chrome et nécessite la mise en oeuvre de deux traitements distincts pour chacune des deux pièces en contact.

On peut également citer, pour améliorer la résistance à l'usure, l'utilisation de résines organiques typiquement appliquées sous forme liquide avant d'être durcies et se présentant donc sous forme de films lubrifiants qui doivent présenter certaines caractéristiques notamment au niveau du coefficient de frottement. Elles doivent avoir une épaisseur faible, être stables et résistants. En effet, dans tous les domaines concernés et notamment dans le domaine aéronautique, le film de résine organique utilisé pour réduire l'usure entre les pièces en mouvement doit avoir une épaisseur très faible de façon à ne pas perturber le principe de fonctionnement des dispositifs. La présence du film de résine organique ne doit pas entraîner une pollution des mécanismes ou de l'environnement, par exemple en raison d'une tension de vapeur trop élevée, de phénomènes de dégazage ou d'écoulements de liquide. De même, la stabilité de la résine organique doit être élevée pour assurer le maintien des performances de frottement et limiter le développement de phénomènes de pollution par formation de sous-produits de dégradation, pendant une durée compatible avec les périodes pendant lesquelles il est impossible d'intervenir sur les pièces en mouvement. La résistance de la résine organique vis-à-vis d'environnements agressifs doit être également très élevée.

La présente invention a pour but de proposer un procédé facile à mettre en oeuvre et permettant d'améliorer les propriétés de résistance à l'usure de tout système dans lequel le mouvement de deux pièces l'une par rapport à l'autre pose des problèmes d'usure et ce, quel(s) que soi(en)t le ou les matériau(x) des deux pièces et quelle que soit la température de fonctionnement.

### EXPOSÉ DE L'INVENTION

Pour ce faire, la présente invention propose un procédé pour améliorer les propriétés de résistance à l'usure d'une pièce comprenant les étapes suivantes consistant à :
a) déposer par projection thermique, sur tout ou partie de la surface de la pièce, une couche comprenant du molybdène ;
b) mettre la surface de la pièce présentant une couche comprenant du molybdène en contact avec une solution aqueuse à une température supérieure à la température ambiante.

Le procédé selon l'invention présente au moins une des caractéristiques optionnelles suivantes, prises isolément ou en combinaison.

La surface de la pièce à traiter est en un matériau choisi parmi les alliages de titane, les alliages de nickel et les aciers inoxydables austénitiques.

La pièce à traiter est une pièce choisie parmi les pièces d'un système à rotule, une tige de vérin, une bague, un engrenage, un arbre à cames, une valve, une pompe à injection, un coussinet, un roulement et un axe.

Lors de l'étape (a) du procédé selon l'invention, la projection thermique mise en oeuvre est une projection plasma.

Lors de l'étape (a) du procédé selon l'invention, la couche déposée par projection thermique comprend majoritairement du molybdène.

Lors de l'étape (b) du procédé selon l'invention, la solution aqueuse ne comprend que de l'eau.

Lors de l'étape (b) du procédé selon l'invention, la solution aqueuse comprend au moins un autre élément en plus du solvant.

Lors de l'étape (b) du procédé selon l'invention, la mise en contact est effectuée en mode statique ou en mode dynamique.

Lors de l'étape (b) du procédé selon l'invention, la mise en contact présente une durée comprise entre 1 h et 54 h et notamment entre 5 h et 48 h.

Le procédé selon la présente invention présente, préalablement à la l'étape (a), une étape de sablage de la surface ou une étape d'usinage.

La présente invention concerne également une pièce sur tout ou partie de la surface de laquelle est déposée une couche comprenant du molybdène puis soumise à une hydratation à une température supérieure à la température ambiante conformément au procédé tel que précédemment défini.

### BRÈVE DESCRIPTION DES DESSINS

La Figure 1 présente l'évolution du coefficient de frottement avec le nombre de cycles parcourus pour une pièce traitée selon le procédé de l'invention i.e. une pièce dont la surface est revêtue d'une couche comprenant du molybdène puis soumise à une hydratation à une température supérieure ou égale à 40°C.
La Figure 2 présente, à titre de comparaison, l'évolution du coefficient de frottement avec le nombre de cycles parcourus pour une pièce dont la surface est revêtue d'une couche comprenant du molybdène sans être soumise à une hydratation à une température supérieure ou égale à 40°C.
La Figure 3 présente, à titre de comparaison, l'évolution du coefficient de frottement avec le nombre de cycles parcourus pour une pièce dont la surface est revêtue d'une couche comprenant du molybdène puis d'une couche de résine organique.

### EXPOSÉ DÉTAILLÉ DE MODES DE RÉALISATION PARTICULIERS

La présente invention propose un procédé de traitement à deux étapes dont seule la première nécessite un appareillage adapté à une projection thermique, notamment plasma. La seconde étape est très facilement mise en oeuvre puisqu'il s'agit d'une hydratation à une température modérée i.e. supérieure à la température ambiante.

La combinaison motivée d'un traitement avec dépôt d'une couche comprenant du molybdène et d'une hydratation permet d'améliorer significativement les propriétés de résistance à l'usure d'une pièce mécanique. Le second traitement qui correspond à l'hydratation conserve l'amélioration en termes de résistance à l'usure apportée par la couche comprenant du molybdène, puisque cette hydratation conserve la porosité de la couche comprenant du molybdène. D'autres traitements connus tels que le dépôt d'une résine organique auraient un effet contraire : ils annihilent les améliorations apportées par la couche comprenant du molybdène.

Par ailleurs, la combinaison motivée d'un traitement avec dépôt d'une couche comprenant du molybdène et d'une hydratation ne modifie pas et voire améliore la résistance à la corrosion de la pièce traitée.

Enfin, le procédé de traitement à deux étapes est utilisable sur toutes les pièces mécaniques sans aucune contrainte quant aux matériaux les constituant et quant à la température à laquelle ces pièces mécaniques sont utilisées.

Ainsi, la présente invention concerne un procédé pour améliorer les propriétés de résistance à l'usure d'une pièce comprenant les étapes suivantes consistant à :
a) déposer par projection thermique, sur tout ou partie de la surface de la pièce, une couche comprenant du molybdène ; et
b) mettre la surface de la pièce présentant une couche comprenant du molybdène en contact avec une solution aqueuse à une température supérieure à la température ambiante.

Par « amélioration des propriétés de résistance à l'usure », on entend que la pièce suite au procédé de l'invention i.e. la pièce dont au moins une zone de la surface présente une couche comprenant du molybdène et soumise à une hydratation à une température supérieure à la température ambiante présente des propriétés de résistance à l'usure améliorées par rapport à la même pièce non traitée.

Par « température ambiante », on entend une température de 22°C ± 5°C. Par conséquent, par « supérieure à la température ambiante », on entend une température supérieure à 27°C.

Par « pièce non traitée », on entend une pièce qui n'a été ni revêtue par une couche comprenant du molybdène, ni soumise à une hydratation à une température supérieure à la température ambiante. Cette amélioration peut être mise en évidence ou quantifiée par des techniques bien connues de l'homme du métier telles que la mesure de la valeur du coefficient de frottement.

Typiquement, la mesure de la valeur du coefficient de frottement est réalisée en présence d'un agent lubrifiant interposé entre les deux pièces glissant, roulant ou pivotant l'une sur l'autre. Tout agent lubrifiant communément utilisé dans le domaine aéronautique peut être mis en oeuvre à cet effet. A titre d'exemples particuliers de tels agents lubrifiants, on peut citer les agents lubrifiants à base de lithium et notamment les agents lubrifiants comprenant (i) une huile synthétique à base d'hydrocarbures et d'esters et épaissie par des complexes de lithium, (ii) des inhibiteurs d'oxydation et de corrosion et (iii) des additifs de charge. Un exemple de tels agents lubrifiants est le produit AeroShell Grease 33® produit par Shell.

La mesure de la valeur du coefficient de frottement est réalisée avec des éprouvettes élémentaires de type pion glissant sur une piste en présence d'un agent lubrifiant notamment tel que précédemment défini.

Dans les mêmes conditions opératoires, le coefficient de frottement de la pièce traitée selon le procédé de l'invention est diminué par rapport au coefficient de frottement obtenu pour la pièce non traitée.

A noter, par ailleurs, que, dans les mêmes conditions opératoires, le coefficient de frottement de la pièce traitée selon le procédé de l'invention est diminué par rapport au coefficient de frottement obtenu pour la pièce n'ayant subi que l'étape (a) du procédé selon l'invention i.e. une pièce dont au moins une zone de la surface présente une couche comprenant du molybdène mais qui n'a pas été soumise à une hydratation. Ainsi, dans les conditions opératoires telles que définies dans la partie expérimentale ci-après, le coefficient de frottement de la pièce traitée selon le procédé de l'invention est diminué d'au moins 5% et notamment d'au moins 10% par rapport au coefficient de frottement obtenu pour la pièce n'ayant subi que l'étape (a) du procédé selon l'invention i.e. une pièce dont au moins une zone de la surface présente une couche comprenant du molybdène mais qui n'a pas été soumise à une hydratation.

La présente invention s'applique à toute pièce dont la surface est susceptible d'être soumise, lorsqu'elle est en contact avec une seconde pièce, à au moins un des deux types d'usure par frottement précédemment présentés i.e. soit à un « fretting-wear », soit à une usure par glissement.

Au sens de la présente invention, par « surface » il faut entendre la partie extérieure d'un objet ou corps solide, qui le limite en tous sens. Il est possible, pour un même objet (ou même corps solide), de définir conceptuellement différentes surfaces. L'invention s'applique à tout type de surface quelle que soit sa géométrie. Cette dernière peut être simple, comme une surface parfaitement plane, ou plus complexe, comme une surface concave ou convexe et ce quel que soit le matériau constituant la surface et le reste de la pièce dont elle dépend.

Dans le cadre de la présente invention, la surface de la pièce à traiter i.e. la pièce dont on souhaite améliorer les propriétés de résistance à l'usure peut être une surface inorganique, une surface organique comme une résine ou encore une surface composite comme un composite à matrice organique, un composite à matrice céramique ou un composite à matrice métallique.

En particulier, lorsque la surface de la pièce à traiter est une surface inorganique, cette dernière peut être une surface en un matériau conducteur, en un matériau semi-conducteur et/ou en un matériau isolant.

Parmi les matériaux conducteurs mis en oeuvre dans le cadre de la présente invention, on peut citer les métaux, les métaux nobles, les métaux oxydés, les métaux de transition, les alliages métalliques et, à titre d'exemples particuliers et non limitatifs, le nickel, le zinc, l'or, le platine, le titane, l'acier, leurs mélanges et leurs alliages. Plus particulièrement, la surface de la pièce à traiter est en un matériau choisi parmi les alliages de titane comme, par exemple, l'alliage dénommé TA6Vqui est un alliage de titane comprenant du titane, 6% en poids d'aluminium et 4% en poids de vanadium, les alliages de nickel comme, par exemple, l'inconel 718® et les aciers inoxydables austénitiques.

Dans le cadre de la présente invention, la pièce à traiter peut être une pièce choisie parmi les pièces d'un système à rotule comme une bille de rotule, une tige de vérin, une bague comme une bague d'étanchéité, un engrenage, un arbre à cames, une valve, une pompe à injection, un coussinet, un roulement et un axe.

Dans le cadre de la présente invention, la pièce à traiter peut présenter une taille et une forme quelconques. La particularité du procédé selon l'invention est qu'il est utilisable même sur des pièces de petites comme de grandes dimensions.

La première étape du procédé selon la présente invention (étape (a)) consiste à déposer, sur la pièce à traiter, une couche comprenant du molybdène par projection thermique.

Toute technique de projection thermique est utilisable dans le cadre de la présente invention. Cette dernière est notamment choisie dans le groupe constitué par la projection par chalumeau, la projection par arc fil, la projection par flamme supersonique et la projection plasma.

La projection thermique mise en oeuvre lors de l'étape (a) du procédé selon l'invention est une projection plasma.

La projection plasma également appelée projection plasmatique ou « plasma spray » en anglais est un procédé de revêtement thermique qui consiste à introduire un matériau particulaire dans un jet plasma dans lequel les particules sont fondues et accélérées avant qu'elles ne viennent s'écraser sur la surface à revêtir. Ainsi, la projection plasma permet d'obtenir un revêtement de haute qualité en combinant une source de chaleur à température élevée et hautement énergétique avec un milieu de projection relativement inerte (gaz plasmagène) et des particules à vitesse élevée.

L'étape (a) du procédé selon la présente invention peut être réalisée sous air ambiant (on parle alors de procédé APS pour « Air Plasma Spraying ») ou dans une enceinte contenant un gaz neutre. Dans ce dernier cas, le procédé mis en oeuvre dépend des conditions particulières présentes dans l'enceinte et ce procédé peut être désigné par procédé LPPS pour « Low Pressure Plasma Spraying », procédé IPS pour « Inert Plasma Spraying » ou encore procédé ATC PS pour « Atmosphère and Temperature Controlled Plasma Spraying ».

On connaît différents types de gaz plasmagènes utilisables lors de la projection plasma de l'étape (a) selon l'invention, ces derniers sont notamment choisis parmi l'oxygène, le propane, l'hélium, l'argon, l'hydrogène, le xénon, le néon, le krypton et leurs mélanges. Par « mélanges » on entend aussi bien les mélanges binaires comme un mélange d'argon et d'hydrogène, un mélange d'oxygène et de propane ou un mélange d'argon et d'hélium que les mélanges ternaires comme un mélange d'hélium, d'argon et d'hydrogène.

Typiquement, la pièce est fixée et centrée sur la surface à revêtir sur un plateau tournant mû en rotation par un moteur. En variante, la pièce à revêtir peut être mue en translation par un moteur. Des refroidisseurs positionnés en périphérie de la pièce assurent que sa température reste constante et proche de la température ambiante pour éviter les déformations de la pièce ou les altérations de ces caractéristiques mécaniques.

Dans une première forme de mise en oeuvre de l'étape (a) du procédé selon l'invention, la couche comprend majoritairement du molybdène. Par « majoritairement », on entend que la proportion en masse de molybdène par rapport à la masse totale de la couche est supérieure ou égale à 70%. La proportion en masse de molybdène par rapport à la masse totale de la couche peut être supérieure ou égale à 80%, typiquement supérieure ou égale à 90%, notamment supérieure ou égale à 95%, en particulier supérieure ou égale à 96%, plus particulièrement supérieure ou égale à 97%, plus particulièrement encore supérieure ou égale à 98%, voire supérieure ou égale à 99%. Les autres éléments éventuellement présents sont des éléments d'addition et/ou des contaminants dont la quantité totale exprimée par rapport à la masse de la couche comprenant du molybdène est inférieure ou égale à 30%. La quantité totale de ces éléments exprimée par rapport à la masse de la couche comprenant du molybdène peut être inférieure ou égale à 20%, typiquement inférieure ou égale à 10%, notamment inférieure ou égale à 5%, en particulier inférieure ou égale à 4%, plus particulièrement inférieure ou égale à 3%, plus particulièrement encore inférieure ou égale à 2%, voire inférieure ou égale à 1%.

Dans une seconde forme de mise en oeuvre de l'étape (a) du procédé selon l'invention, la couche est une couche en un alliage de molybdène et notamment en un alliage de molybdène et de cuivre.

Suite à l'étape (a) du procédé selon la présente invention, tout ou partie de la surface de la pièce à traiter est revêtue d'une couche comprenant du molybdène, ladite couche étant poreuse, avec des tailles de pores de l'ordre micrométrique.

Typiquement, l'épaisseur de cette couche est comprise entre 100 µm et 2 mm, notamment entre 110 µm et 1 mm et, en particulier, entre 120 µm et 700 µm. Pour atteindre une telle épaisseur pour la couche comprenant du molybdène, il peut être nécessaire de soumettre cette couche à un traitement permettant de réduire son épaisseur tel qu'un meulage, un rodage ou un usinage et ce, suite à l'étape (a) et préalablement à l'étape (b) du procédé selon l'invention.

La seconde étape du procédé selon la présente invention (étape (b)) consiste à soumettre à une hydratation la surface de la pièce revêtue d'une couche comprenant du molybdène. Cette hydratation est réalisée en présence d'une solution aqueuse et à une température supérieure à la température ambiante.

La solution mise en oeuvre lors de l'étape (b) du procédé selon l'invention comprend, comme solvant, de l'eau justifiant ainsi l'appellation de solution aqueuse. Par « eau », on entend l'eau de distribution, l'eau dé-ionisée, l'eau distillée ou encore l'eau ultra-pure (18,2 MΩ). La solution mise en oeuvre lors de l'étape (b) du procédé selon l'invention peut être une solution aqueuse neutre, acide ou basique. L'homme du métier saura déterminer le pH le plus adapté et à modifier, en conséquence, le pH de la solution aqueuse, si nécessaire.

Typiquement, la solution aqueuse mise en oeuvre lors de l'étape (b) ne comprend que de l'eau. En variante, elle peut comprendre au moins un autre élément en plus du solvant. Tout élément apte à améliorer certaines propriétés sur la pièce revêtue ou apte à accélérer ou faciliter le procédé selon l'invention peut être présent dans la solution aqueuse mise en oeuvre lors de l'étape (b). A titre d'exemples d'un tel autre élément, on peut citer un additif inhibiteur de corrosion et un additif inhibiteur d'oxydation. A titre d'exemples plus particuliers d'un tel autre élément, on peut citer un élément choisi dans le groupe constitué par un composé fluoré, un composé à base de stannate, un composé à base de molybdate, un composé à base de silicate, un composé à base de cérium(III), un composé à base de phosphate, un composé à base de (di)chromate, un composé à base de cobalt, un composé à base de carboxylate, un composé à base de sulfite et leurs mélanges.

Dans une première forme de mise en oeuvre, l'étape (b) consiste à préparer une solution aqueuse telle que précédemment définie à une température T supérieure à la température ambiante puis à mettre en contact cette solution avec la surface de la pièce présentant une couche comprenant du molybdène et à maintenir l'ensemble à la température T.

Dans une seconde forme de mise en oeuvre, l'étape (b) consiste à préparer une solution aqueuse telle que précédemment définie à la température ambiante puis à mettre en contact cette solution avec la surface de la pièce présentant une couche comprenant du molybdène et à amener l'ensemble à une température T supérieure ou égale à la température ambiante.

Cette température T appelée « température de traitement » est supposée être atteinte lorsque la mesure de la température de la solution aqueuse effectuée à l'aide d'un moyen de métrologie adapté comme, par exemple un thermomètre ou thermocouple, conduit à une valeur proche de la température désirée pendant typiquement 15 min, aux incertitudes de mesure près.

Dans le cadre de la présente invention, la température de traitement est supérieure à 30°C, notamment supérieure à 40°C, typiquement comprise entre 40°C et 98°C, en particulier entre 60°C et 97°C et, plus particulièrement, entre 80°C et 95°C.

Dans le procédé selon l'invention, la mise en contact entre la surface de la pièce présentant une couche comprenant du molybdène et la solution aqueuse peut se faire par tout moyen permettant une hydratation uniforme de la surface de la pièce présentant une couche comprenant du molybdène. Ainsi, la mise en contact lors de l'étape (b) peut être effectuée en mode statique ou en mode dynamique.

Dans le « mode statique » également appelé « mode batch », la surface de la pièce présentant une couche comprenant du molybdène et typiquement la pièce sont plongées et maintenues dans la solution aqueuse, cette dernière étant éventuellement soumise à une agitation. L'agitation à laquelle la solution aqueuse est éventuellement soumise peut être une agitation mécanique, une agitation magnétique ou une agitation par ultrasons. A cet effet, un malaxeur, un agitateur, un barreau magnétique, un bain à ultrasons ou un homogénéisateur peuvent être utilisés.

Dans le « mode dynamique » également appelé « mode colonne », la solution aqueuse s'écoule sur la surface de la pièce présentant une couche comprenant du molybdène.

La mise en contact entre la surface de la pièce présentant une couche comprenant du molybdène et la solution aqueuse est réalisée pendant une durée inférieure à 96 h, notamment inférieure à 72 h et, en particulier, inférieure à 60 h. Avantageusement, cette mise en contact présente une durée comprise entre 1 h et 54 h et notamment entre 5 h et 48 h.

Dans le cadre du procédé selon l'invention et plus particulièrement durant l'étape de mise en contact, lorsque cette dernière est réalisée en mode statique, il peut être nécessaire de compléter le volume de solution aqueuse en permanence avec de l'eau, afin de compenser l'évaporation induite par la température de traitement. Tout dispositif permettant de maintenir un volume de solution aqueuse sensiblement constant par condensation des vapeurs notamment (montage au reflux) peut être utilisé avantageusement.

De plus, dans le cadre du procédé selon l'invention et plus particulièrement durant l'étape de mise en contact, il est nécessaire de maintenir la température de la solution aqueuse à la température de traitement telle que précédemment définie. A cet effet, la mise en contact est réalisée en présence d'un élément chauffant et de moyens de régulation de température aptes à maintenir ledit élément chauffant à une température de consigne, choisie de façon à ce que, lorsque ladite température de consigne est obtenue et maintenue, la température de la solution aqueuse est maintenue à la température de traitement.

A la fin du procédé selon l'invention i.e. une fois la durée de la mise en contact entre la surface de la pièce présentant une couche comprenant du molybdène et la solution aqueuse écoulée, la surface peut être soumise à un rinçage. Cette étape de rinçage permet notamment d'éliminer les autres éléments susceptibles d'être présents dans la solution aqueuse en plus du solvant tels que précédemment définis. Ce rinçage est typiquement effectué avec le même solvant que le solvant de la solution aqueuse. La surface de la pièce présentant une couche comprenant du molybdène une fois rincée est mise à sécher dans un environnement propre et ce, pour éviter toute contamination solide ou liquide de la surface de la pièce traitée.

Si la mise en contact a été effectuée en mode statique, la surface de la pièce présentant une couche comprenant du molybdène et donc la pièce sont retirées de la solution aqueuse puis lavées en les plongeant dans une solution de lavage ou en faisant s'écouler la solution de lavage sur cette surface. Si la mise en contact a été effectuée en mode statique, on remplace la solution aqueuse s'écoulant sur la surface de la pièce présentant une couche comprenant du molybdène par la solution de lavage.

Le procédé selon la présente invention peut présenter, éventuellement préalablement à la mise en oeuvre de l'étape (a), une étape permettant de préparer la pièce et de favoriser l'accroche de la couche à base de molybdène sur la surface de la pièce à traiter et ce, notamment en accroissant l'adhésion de la couche à base de molybdène par ancrage mécanique et/ou en augmentant la rugosité de la surface à revêtir. Une telle étape peut consister en une étape de sablage de la surface i.e. une étape de jet d'abrasifs ou une étape d'usinage.

La présente invention concerne également une pièce sur tout ou partie de la surface de laquelle est déposée une couche comprenant du molybdène puis soumise à une hydratation à une température supérieure à la température ambiante conformément au procédé tel que précédemment défini.

Tout ce qui a été expliqué précédemment pour le procédé s'applique *mutatis mutandis* à la pièce selon l'invention.

D'autres caractéristiques et avantages de la présente invention apparaîtront encore à la lecture de l'exemple ci-après donné à titre illustratif et non limitatif.

### I. Traitement conformément au procédé selon l'invention.

### I.1. Etape de dépôt d'une couche comprenant du molybdène

Une pièce en TA6V se présentant sous forme de plaque est revêtue, par projection plasma, d'une couche comprenant du molybdène d'une épaisseur de 150 ± 20 µm une fois rectifiée par meulage, rodage ou usinage.

### I.2. Etape d'hydratation

Une fois revêtue avec la couche comprenant du molybdène, la pièce en TA6V se présentant sous forme de plaque est placée dans de l'eau de distribution pendant 24 h à une température comprise entre 80 et 95°C.

### II. Mesure du coefficient de frottement

Les comportements d'usure sont étudiés par glissement entre un pion en alliage de cuivre et une piste en TA6V en présence d'un agent lubrifiant du type AeroShell Grease 33® produit par Shell avec, comme conditions d'essai, une fréquence de 8 Hz et une pression de contact de 530 MPa. La mesure de la valeur du coefficient de frottement est réalisée sur un tribomètre.

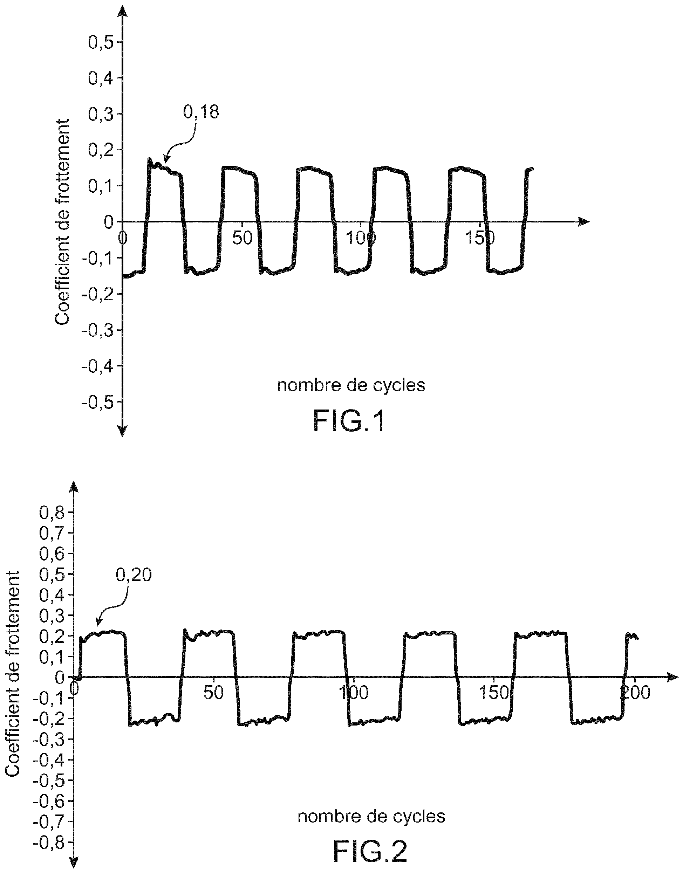

Lorsque cette surface a subi le procédé de traitement tel que défini au point I ci-dessus, le coefficient de frottement est de 0,18 (Figure 1).

A noter qu'une surface en TA6V ayant seulement subi la première étape du procédé selon l'invention telle que définie au point I.1 ci-dessus présente un coefficient de frottement de 0,20 (Figure 2).

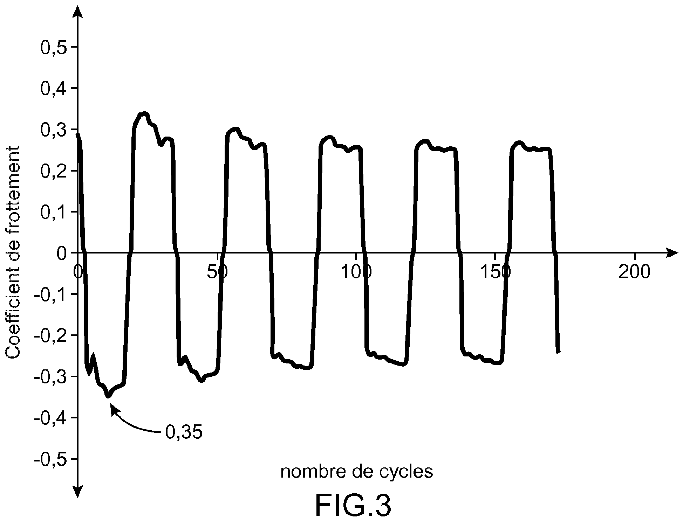

A titre de comparaison, une surface en TA6V recouverte d'une couche comprenant du molybdène selon le protocole tel que défini au point I.1, ladite couche étant, par la suite, recouverte par une couche de résine organique présente un coefficient de frottement de 0,35 (Figure 3).

De plus, le coefficient de frottement obtenu pour la surface en TA6V ayant subi le subi le procédé de traitement tel que défini au point I ci-dessus est stable jusqu'à une valeur de 300 000 cycles alors que, dans les mêmes conditions de distance parcourue, le coefficient de frottement d'une surface en TA6V revêtue d'une couche comprenant du molybdène et d'une couche en une résine organique est instable mais toujours dans des valeurs élevées i.e. supérieures ou égales à 0,35 et ce, dès 60 000 cycles.

Comme déjà expliqué, l'hydratation ne modifie pas la structure poreuse de la couche comprenant du molybdène contrairement à la résine organique qui bouche les pores de cette couche. Les pores présentes dans la couche de molybdène jouent le rôle de réservoir d'agent lubrifiant dans les conditions testées et donc dans les conditions d'utilisation des pièces métalliques traitées selon le procédé selon l'invention.

## Revendications

1. Procédé pour améliorer les propriétés de résistance à l'usure d'une pièce comprenant les étapes suivantes consistant à :
a) déposer par projection thermique, sur tout ou partie de la surface de la pièce, une couche comprenant du molybdène ;
b) mettre la surface de la pièce présentant une couche comprenant du molybdène en contact avec une solution aqueuse à une température supérieure à la température ambiante.

2. Procédé selon la revendication 1, **caractérisé en ce que** la surface de ladite pièce est en un matériau choisi parmi les alliages de titane, les alliages de nickel et les aciers inoxydables austénitiques.

3. Procédé selon la revendication 1 ou 2, **caractérisé en ce que** ladite pièce est une pièce choisie parmi les pièces d'un système à rotule, une tige de vérin, une bague, un engrenage, un arbre à cames, une valve, une pompe à injection, un coussinet, un roulement et un axe.

4. Procédé selon l'une quelconque des revendications 1 à 3, **caractérisé en ce que**, lors de ladite étape (a), la projection thermique mise en oeuvre est une projection plasma.

5. Procédé selon l'une quelconque des revendications 1 à 4, **caractérisé en ce que**, lors de ladite étape (a), la couche déposée par projection thermique comprend majoritairement du molybdène.

6. Procédé selon l'une quelconque des revendications 1 à 5, **caractérisé en ce que**, lors de ladite étape (b), la solution aqueuse ne comprend que de l'eau.

7. Procédé selon l'une quelconque des revendications 1 à 5, **caractérisé en ce que**, lors de ladite étape (b), la solution aqueuse comprend au moins un autre élément en plus du solvant.

8. Procédé selon l'une quelconque des revendications 1 à 7, **caractérisé en ce que**, lors de ladite étape (b), la mise en contact est effectuée en mode statique ou en mode dynamique.

9. Procédé selon l'une quelconque des revendications 1 à 8, **caractérisé en ce que**, lors de ladite étape (b), la mise en contact présente une durée comprise entre 1 h et 54 h et notamment entre 5 h et 48 h.

10. Procédé selon l'une quelconque des revendications 1 à 8, **caractérisé en ce que** ledit procédé présente, préalablement à la ladite étape (a), une étape de sablage de la surface ou une étape d'usinage.

11. Pièce sur tout ou partie de la surface de laquelle est déposée une couche comprenant du molybdène en une proportion en masse supérieure ou égale à 70% par rapport à la masse totale de ladite couche, puis soumise à une hydratation à une température supérieure à la température ambiante conformément au procédé tel que défini à l'une quelconque des revendications 1 à 10.
